# EUROPÄISCHE PATENTSCHRIFT

(11) **EP 3 870 316 B1**
(45) Veröffentlichungstag und Bekanntmachung des Hinweises auf die Patenterteilung: **01.04.2026**
(21) Anmeldenummer: 19795499.3
(22) Anmeldetag: 23.10.2019
(51) Int. Cl.: A62C 2/06, E04B 1/94, E06B 5/16, F16L 5/04

(54) **VERBUNDWERKSTOFF UND BRANDSCHUTZELEMENT ZUM ABDICHTEN VON DURCHGANGSÖFFNUNGEN UND FUGEN IN BAUELEMENTEN**
COMPOSITE MATERIAL AND FIRE PROTECTION ELEMENT FOR SEALING HOLES AND GAPS IN STRUCTURAL ELEMENTS
MATIÈRE COMPOSITE ET ÉLÉMENT DE PROTECTION CONTRE L'INCENDIE PERMETTANT D'ÉTANCHÉIFIER LES OUVERTURES DE PASSAGE ET LES JOINTS DES COMPOSANTS

(30) Priorität: 24.10.2018 EP 18202284
(43) Veröffentlichungstag der Anmeldung: 01.09.2021
(73) Patentinhaber: Hilti Aktiengesellschaft, 9494 Schaan (LI)
(72) Erfinder: SIMON, Sebastian, 86807 Buchloe Lindenberg (DE); AHLERS, Andreas, 87679 Westendorf (DE); PREM, Ramona, 86836 Untermeitingen (DE); WILLNER, Ralf, 86874 Tussenhausen (DE); FREUDLING, Sarah, 86157 Augsburg (DE); ANDREAE, Sigrid, 9478 Azmoos (CH); WOLFER, Claudio, 9468 Say (CH); SCHREINER, Michael, 88147 Achberg (DE)
(74) Vertreter: Hilti Aktiengesellschaft Corporate Intellectual Property
(86) Internationale Anmeldenummer: PCT/EP2019/078788
(87) Internationale Veröffentlichungsnummer: WO 2020/083956

(56) Entgegenhaltungen:
- WO-A1-2018/016580
- JP-A- 2008 045 360

## Beschreibung

Die vorliegende Erfindung betrifft einen Verbundwerkstoff, ein Verfahren zu dessen Herstellung sowie ein Brandschutzelement enthaltend den erfindungsgemäßen Verbundwerkstoff zum Schutz von Durchgangsöffnungen in Bauelementen im Brandfall, wie beispielsweise Gebäudeteilen, durch die Leitungen hindurchgeführt werden. Die vorliegende Erfindung betrifft ferner die Verwendung des Verbundwerkstoffes als Brandschutzelement zur Abdichtung von Durchgangsöffnungen und/oder Fugen in Bauelementen.

Beim Verlegen von Leitungen, wie z.B. Rohrleitungen, elektrische Leitungen und dergleichen, werden diese durch Durchgangsöffnungen in Bauelementen, insbesondere Gebäudebauteilen, wie Wände und Decken, geführt. Um den Durchtritt von Feuer und Rauchgasen im Brandfall zu verhindern, werden zwischen den Innenwänden der Durchgangsöffnungen und den hindurchgeführten Leitungen sowie in Fugen Brandschutzelemente eingebracht. Diese Brandschutzelemente werden in der Regel mit intumeszierenden Materialien versehen oder aus diesen gebildet, so dass sich das Material bei Einwirkung von Wärme, wie sie im Brandfall auftritt, ausdehnt und dadurch die Leitung abdrückt und die Durchgangsöffnung in dem Bauelement verschließt.

In der Regel weisen die Brandschutzelemente ein Trägermaterial auf, dem für die Zwecke des Brandschutzes Additive zugesetzt werden, die bei erhöhter Temperatur, wie etwa im Brandfall, expandieren bzw. intumeszieren und in Zusammenspiel mit dem Trägermaterial und ggf. weiteren Additiven eine isolierende Schicht bilden und somit die ggf. entstehende Öffnung verschließen.

In den bekannten Brandschutzelementen wird häufig ein physikalisch wirkendes Treibmittel eingesetzt. Dieses ist üblicherweise zufällig auf einer oder mehreren Flächen der Oberfläche des Trägermaterials und/oder innerhalb des Trägermaterials verteilt. Häufig weisen die physikalisch wirkenden Treibmittel eine strukturelle Anisotropie auf, was bedeutet, dass sie beispielsweise in Form von Plättchen oder Fasern vorliegen können. In bekannten Brandschutzelementen wird diese strukturelle Anisotropie nicht berücksichtigt, so dass das physikalisch wirkende Treibmittel auf einer oder mehreren Flächen der Oberfläche und/oder innerhalb des Trägermaterials zufällig orientiert bzw. ausgerichtet vorliegt. Das physikalisch wirkende Treibmittel zeigt somit keine Vorzugsorientierung. Man spricht in diesem Fall auch von einer isotropen oder statistischen Ausrichtung bzw. Orientierung des physikalisch wirkenden Treibmittels auf einer oder mehreren Flächen der Oberfläche des Trägermaterials und/oder innerhalb des Trägermaterials.

Durch die zufällige Orientierung des physikalisch wirkenden Treibmittels innerhalb des Trägermaterials, geschieht im Brandfall eine Expansion bzw. Intumeszenz des physikalisch wirkenden Treibmittels im Wesentlichen gleichmäßig in alle drei Raumrichtungen. Bei Brandschutzelementen, die beispielsweise zum Abdichten von Durchgangsöffnungen verwendet werden, wird jedoch eine verstärkte Expansion in Richtung der zu verschließenden Durchgangsöffnung benötigt. Die Expansion in alle drei Raumrichtungen führt bei bekannten Brandschutzelementen dazu, dass ein Großteil des expandierten Materials seitlich aus der Durchgangsöffnung herausgedrückt wird und somit nur ein geringer Druck in Richtung der Durchgangsöffnung ausgeübt wird. Zudem ist das aus der Durchgangsöffnung herausgedrückte Material ungeschützt und daher mechanischen Belastungen ausgesetzt, wie beispielsweise einem Löschwasserstrahl, Luftströmungen, hervorgerufen durch einen Brand oder dergleichen, so dass der herausgedrückte Anteil des expandierten Materials im Brandfall und beim Löschangriff nicht beständig ist. Weiterhin ist durch das seitliche Herausdrücken des Materials aus der Durchgangsöffnung die Geschwindigkeit des Zusammendrückens der durchgeführten Leitung reduziert, so dass eine kurze Verschlusszeit im Brandfall nicht gewährleistet ist.

In bestehenden Brandschutzelementen wird versucht das Problem des Herausdrückens des expandierten Materials durch eine entsprechende Formgebung des Gehäuses des Brandschutzelements oder den Einsatz von Gewebe, welches das expandierte Material umschließt, zu verhindern.

So beschreibt die EP 3 260 678 A1 ein streifenförmiges Brandschutzelement, in dem eine Innenlage aus intumeszierenden Material zumindest über einen Teil ihrer Breite mit einer Verstärkungsmaterial versehen ist, so dass durch das Umbiegen im Bereich der Verstärkungseinlage eine Umklappkante ausgebildet wird, die die Verstärkungseinlage außenseitig umgibt.

Die DE 2004 055 928 B4 beschreibt eine Brandschutzmanschette, bei der eine Transporteinrichtung vorgesehen ist, die unter Wärmeeinwirkung expandierendes Material im Brandfall von einer Stützeinrichtung in die Richtung auf das Innere der Durchführung verlagert.

In einem anderen Ansatz wird die Geometrie der Brandschutzelemente so gestaltet, dass ein besserer Wärmeeintrag zustande kommt, wodurch eine frühere Expansion des intumeszierenden Materials stattfindet. Entsprechende Brandschutzelemente sind beispielsweise in der EP 1 273 841 A1, DE 10 2008 031 018 A1 und DE 20 2012 003 405 U1 beschrieben.

Mit den bekannten Brandschutzelementen kann das seitliche Herausdrücken des expandierten Materials zwar verringert, aber nicht unterbunden werden, so dass es weiterhin zu einem Verlust an Material kommt, welches nicht für den Verschluss der Durchgangsöffnung zur Verfügung steht. Zusätzlich führt das seitliche Herausdrücken des expandierten Materials zu einer Querverdichtung des expandierten Materials, wodurch die Expansion des physikalisch wirkenden Treibmittels zur Durchgangsmitte zum Verschluss des Durchgangs behindert wird. Ferner entsteht bei diesen Brandschutzelementen eine Verdichtung der physikalisch wirkenden Treibmittel durch Kompression an den Wandungen bzw. an den Gewebeflächen des Brandschutzelements. Diese komprimierten Bereiche haben ein vermindertes Expansionspotential, welches im Brandfall nicht mehr für den Durchgangsverschluss zur Verfügung steht. Ferner sorgt die Verdichtung zu einer Zunahme der Wärmeleitfähigkeit, wodurch ein schnellerer Temperaturanstieg an der brandabgewandten Seite auftritt, mit dem ein erhöhtes Risiko für einen Feuerübertritt einhergeht.

Im Dokument WO2018/016580 A1 wird ein feuerfester Formkörper offenbart. Der feuerfeste Formkörper umfasst Blähgraphit, welches in ein thermoplastisches Harz oder ein Elastomer eingebettet ist. Der beschriebene Formkörper ist durch die Ausrichtung der longitudinalen Richtung der einzelnen Blähgraphitteilchen in Bezug auf die Fertigungsrichtung ("*machine direction (MD)*") charakterisiert, wobei bei 100facher Vergrößerung der Unterschied zwischen der longitudinalen Ausrichtung jedes einzelnen Blähgraphitplättchens und der Fertigungsrichtung maximal ± 10° beträgt. Gemäß der Lehre dieses Dokumentes müssen die Blähgraphitplättchen entlang der Fertigungsrichtung ausgerichtet werden und es verbietet sich ein senkrechtes Aufrichten der Blähgraphitteilchen aus der Fertigungsebene. Innerhalb der Fertigungsebene können die Blähgraphitteilchen jedoch frei um 360° entlang ihrer longitudinalen Ausrichtung (longitudinalen Achse) rotiert vorliegen, wodurch im Brandfall eine radial ungerichtete Expansion stattfindet.

Die zuvor beschriebenen Nachteile kommen insbesondere bei Brandschutzelementen für größere Öffnungsquerschnitte zum Tragen. Bei diesen Brandschutzelementen werden große Mengen an physikalisch wirkenden Treibmitteln eingesetzt, um einen zuverlässigen Verschluss der Durchgangsöffnung im Brandfall zu gewährleisten. Die zuvor beschriebenen Probleme sind daher hier im verstärktem Maß zu beobachten. Zusätzlich weisen diese Brandschutzelemente teilweise ein hohes Gewicht auf, wodurch deren Installation erschwert wird. Zusätzlich ist die Verwendung von großen Mengen an physikalisch wirkenden Treibmitteln sowohl unter ökologischen als auch wirtschaftlichen Gesichtspunkten von Nachteil.

Es besteht daher Bedarf an einer Lösung zur zuverlässigen Abdichtung, insbesondere gegen Rauch und Feuer, eines Zwischenraumes zwischen einer Innenfläche einer Durchgangsöffnung und einer hindurchgeführten Leitung im Brandfall, mit der erreicht werden kann, dass bei der Expansion des physikalisch wirkenden Treibmittels dieses in verringertem Maß aus dem Zwischenraum herausgedrückt wird und folglich die hindurchgeführte Leitung in verstärktem Maße abgedrückt wird.

Ferner ist es Aufgabe der vorliegenden Erfindung eine Lösung für den Einsatz in einem oder als Brandschutzelement zur Verfügung zu stellen, welche eine Verringerung des Materialeinsatzes, insbesondere der Menge an physikalisch wirkenden Treibmittel(n), ermöglicht, ohne die Performance des Brandschutzelementes, insbesondere dessen Verschlussfähigkeit, im Brandfall zu beeinträchtigen. Es ist insbesondere Aufgabe der vorliegenden Erfindung eine Lösung zur Verfügung zu stellen, mit der eine Verringerung der Menge des physikalisch wirkenden Treibmittels im Brandschutzelement ermöglicht wird und mit der gleichzeitig eine verbesserte Performance des Brandschutzelements im Brandfall, insbesondere eine verbesserte Verschlussfähigkeit, erreicht werden kann.

Diese Aufgabe wird durch einen Verbundwerkstoff nach Anspruch 1, durch ein Verfahren gemäß Anspruch 9, durch ein Brandschutzelement gemäß Anspruch 10 sowie durch eine Verwendung nach Anspruch 11 gelöst.

Gemäß einem ersten Aspekt der Erfindung ist ein Verbundwerkstoff vorgesehen hergestellt durch ein Verfahren umfassend die folgenden Schritte:
i) Bereitstellen eines Trägermaterials,
ii) Bereitstellen einer Vielzahl an Teilchen mindestens eines schichtartig aufgebauten, physikalisch wirkenden Treibmittels,
iii) Vermischen des Trägermaterials und des schichtartig aufgebauten, physikalisch wirkenden Treibmittels zur Herstellung einer Vorstufe,
wobei die Vorstufe während oder im Anschluss an Schritt iii) einem mechanischen Formgebungsverfahren unterzogen wird, in dem jeweils zueinander benachbarte Teilchen des schichtartig aufgebauten, physikalisch wirkenden Treibmittels über den gesamten Verbundwerkstoff im Wesentlichen parallel zueinander angeordnet werden.

Eine Idee des obigen Verbundwerkstoffes besteht darin, ein strukturell anisotrop aufgebautes, physikalisch intumeszierendes Material (schichtartig aufgebautes, physikalisch wirkendes Treibmittel) mit einem Trägermaterial zu kombinieren und die strukturelle Anisotropie des physikalisch intumeszierendes Material mittels Ausrichtung bzw. Orientierung der Teilchen zu nutzen, um damit Einfluss auf die Richtung der Expansion im Brandfall zu nehmen und diese somit gezielt steuern zu können. Die Ausrichtung bzw. Orientierung der Teilchen des schichtartig aufgebauten, physikalisch wirkenden Treibmittels im Trägermaterial wird dadurch erzielt, dass die Vorstufe während oder im Anschluss an Schritt iii) einem mechanischen Formgebungsverfahren unterzogen wird. Bei den im Rahmen der vorliegenden Erfindung verwendeten schichtartig aufgebauten, physikalisch wirkenden Treibmitteln erfolgt die Expansion im Brandfall im Wesentlichen in eine Richtung, nämlich senkrecht zu den einzelnen Schichten, aus denen das physikalisch wirkende Treibmittel aufgebaut ist. Werden nunmehr die jeweils zueinander benachbarten Teilchen des schichtartig aufgebauten, physikalisch wirkenden Treibmittels über den gesamten Verbundwerkstoff im Wesentlichen parallel zueinander angeordnet, findet bei Wärmeeintrag eine Expansion im Wesentlichen senkrecht zu den parallel ausgerichteten Teilchen statt und es ist möglich, die Expansion in eine gewünschte Richtung zu lenken.

Zum besseren Verständnis der Erfindung werden die folgenden Erläuterungen der hierin verwendeten Terminologie als sinnvoll erachtet. Im Sinne der Erfindung:
- beschreibt der Begriff *"Verbundwerkstoff"* einen Werkstoff, der während der Herstellung durch stoffschlüssige Kombination unterschiedlicher Materialien erhalten wird und dessen chemische und physikalische Eigenschaften die der Einzelkomponenten übertreffen;
- beschreibt der Begriff *"Trägermaterial"* eine Zusammensetzung umfassend ein oder mehrere Polymere. Das Trägermaterial zeichnet sich dadurch aus, dass das oder die Polymere eine kontinuierliche Phase bilden;
- beschreibt der Begriff *"stoffschlüssig",* einen durch molekulare Kräfte entstehenden Schluss zwischen zwei Materialien, der diese so zusammenhält, dass sie in ihrer Gesamtheit einen festen Körper ergeben. Das Lösen einer stoffschlüssigen Verbindung ist vielfach nur unter Zerstörung der Elemente möglich, die über eine stoffschlüssige Verbindung miteinander verbunden waren.
- beschreibt der Begriff *"formschlüssig"* einen durch Ineinandergreifen von mindestens zwei Verbindungspartnern entstehenden Schluss zwischen zwei Materialien. Im Sinne der vorliegenden Erfindung kann ein Formschluss insbesondere dadurch hergestellt werden, indem die plastische Verformbarkeit des polymeren Trägermaterials genutzt wird, um ein Ineinandergreifen zu bewirken.
- bedeutet *"physikalische Intumeszenz"* die Bildung einer voluminösen, isolierenden Schicht durch Aufblähen einer Verbindung, die, ohne dass eine chemische Reaktion zwischen zwei Verbindungen stattgefunden hat, bei Hitzeeinwirkung Gase freisetzt, wodurch das Volumen der Verbindung um ein Vielfaches des ursprünglichen Volumens zunimmt. Im Rahmen der vorliegenden Erfindung ist unter dem Begriff eines physikalisch wirkenden Treibmittels ein Material oder eine Komponente zu verstehen, die in der Lage ist, physikalische Intumeszenz beim Überschreiten einer bestimmten Temperatur, der sogenannten Aktivierungstemperatur, zu zeigen;
- bedeutet der Begriff *"thermische Expansion"* oder vereinfacht *"Expansion"* die durch physikalische und/oder chemische Intumeszenz hervorgerufene Volumenzunahme eines Materials oder einer Komponente;
- ist ein *"Polymer"* ein Molekül mit sechs oder mehr Wiederholungseinheiten, das eine Struktur aufweisen kann, die linear, verzweigt, sternförmig, gewunden, hyperverzweigt oder vernetzt sein kann; Polymere können eine einzelne Art von Wiederholungseinheiten aufweisen ("Homopolymere") oder sie können mehr als eine Art von Wiederholungseinheiten aufweisen ("Copolymere");
- bedeutet der Begriff *"Festkörpergehalt"* den Gehalt an nicht-flüchtigen Anteilen an einer Zusammensetzung. Die Bestimmung des Festkörpergehaltes wird nach DIN EN ISO 3251 (2008) durchgeführt;
- bedeutet *"enthalten"* und *"umfassen",* dass neben den genannten Bestandteilen noch weitere vorhanden sein können. Diese Begriffe sind einschließlich gemeint und umfassen daher auch den Begriff *"bestehen aus". "Bestehen aus"* ist abschließend gemeint und bedeutet, dass keine weiteren Bestandteile vorhanden sein können. In einer bevorzugten Ausführungsform bedeuten die Begriffe *"enthalten"* und *"umfassen"* den Begriff *"bestehen aus";*
- beschreibt ein durch Zahlen begrenzter Bereich, z.B. "5 bis 60 Gew.-%", dass die beiden Eckwerte und jeder Wert innerhalb dieses Bereichs einzeln offenbart sind.

Schritt i) zur Herstellung des erfindungsgemäßen Verbundwerkstoffes umfasst die Bereitstellung eines Trägermaterials. Das Trägermaterial umfasst vorzugsweise eine Polymerdispersion auf Wasser- oder Lösungsmittelbasis, insbesondere eine wässrige Polymerdispersion. Beispiele wässriger Polymerdispersionen, die sich in besonderem Maße bewährt haben, sind wässrige Acrylatdispersionen, wässrige Dispersionen bzw. Emulsionen von Harnstoff-, Formaldehyd- oder Melaminharzen, Polyvinylacetaten, Polyvinylalkoholen, Acrylnitril, Styrolacrylaten und ihrer Copolymere.

Bevorzugt enthält das Trägermaterial des erfindungsgemäßen Verbundwerkstoffs eine wässrige Acrylat-(Copolymer)-Dispersion, besonders bevorzugt eine wässrige Dispersion eines Polyalkyl-(meth)acrylats und/oder eines Alkyl(meth)acrylat-Copolymers. Vorzugsweise handelt es sich dabei um wässrige Dispersionen, die man durch Polymerisation, namentlich durch Emulsionspolymerisation von Alkyl(meth)acrylaten und/oder durch Copolymerisation von Alkyl(meth)acrylaten mit sich und/oder mit copolymerisierbaren Comonomeren, wie vorzugsweise (Meth)acrylsäure, (Meth)acrylamid, Styrol, Itaconsäure, Acrylnitril und/ oder Citraconsäure erhält, wobei die Alkylgruppen der Alkyl(meth)acrylate bevorzugt 1 bis 6 C-Atome, bevorzugter 1 bis 4 C-Atome aufweisen. Erfindungsgemäß besonders bevorzugt sind wässrige Dispersionen von Polybutylacrylat, Polyethylhexylacrylat oder Alkyl(meth)acrylat-Styrol-Copolymeren. Die Acrylat-(Copolymer)-Dispersion kann sowohl Homopolymere als auch Copolymere oder auch Mischungen von Homopolymeren und/oder Copolymeren enthalten und wird so vorzugsweise mit einem pH-Wert im Bereich von 7 bis 9, vorzugsweise einen pH-Wert von 8, welcher erforderlichenfalls mit verdünnter Natronlauge oder Ammoniaklösung eingestellt wird, mit den anderen Bestandteilen vermischt. Diese wässrige Acrylat- (Copolymer)-Dispersion besitzt vorzugsweise einen Festkörpergehalt von 40 bis 90 Gew.-%, stärker bevorzugt von 50 bis 80 Gew.-%. Die erfindungsgemäß bevorzugt eingesetzten Acrylat-(Copolymer)- Dispersionen sind dem Fachmann bekannt und im Handel erhältlich. Die Härtung erfolgt physikalisch durch Trocknen.

Es ist weiterhin bevorzugt, dass das Trägermaterial einen Erweichungs- oder Zersetzungspunkt im Temperaturbereich von 80 °C bis 500 °C, bevorzugt von 90 °C bis 400 °C, weiter bevorzugt von 110 °C bis 300 °C hat. Durch eine geeignete Wahl der Erweichungs- oder Zersetzungstemperatur des Trägermaterials können die Expansionseigenschaften des erfindungsgemäßen Verbundwerkstoffes beeinflusst werden. Tritt im Brandfall eine frühzeitige Erweichung bzw. Zersetzung des Trägermaterials ein, so führt dies gegebenenfalls zu einer Umorientierung der Teilchen des schichtartig aufgebauten, physikalisch wirkenden Treibmittels durch Verformen und/oder Schmelzen des Trägermaterials. Liegt die Erweichungs- oder Zersetzungstemperatur des Trägermaterial zu hoch, wird die Expansion des schichtartig aufgebauten, physikalisch wirkenden Treibmittels behindert.

Es kann vorgesehen sein, dass das Trägermaterial weiterhin mindestens eine organische und/oder anorganische Faser umfasst, welche insbesondere aus der Gruppe bestehend aus Glasfaser, Keramikfaser, Carbonfaser, Polyamidfaser, Metallfaser, Borfaser, Naturfaser, Steinfaser und Mischungen davon, ausgewählt ist. Die Anwesenheit einer organischen und/oder anorganischen Faser im Trägermaterial erleichtert die Einarbeitung und Orientierung des schichtartig aufgebauten, physikalisch wirkenden Treibmittels in das Trägermaterial.

Besonders geeignete Fasern sind Glasfasern und/oder Metallfasern, insbesondere aus E-Glas, Silikatfasern oder Mineralwollfasern.

Die organischen bzw. anorganischen Fasern haben bevorzugt eine Länge von 1 mm bis 25 mm, stärker bevorzugt von 2 mm bis 20 mm und besonders bevorzugt von 3 mm bis 15 mm. Beispielhaft können hier Glasfasern der Firma STW erwähnt werden.

Die organischen bzw. anorganischen Fasern sind bevorzugt in einer Menge von 0,1 bis 25,0 Gew.-%, bevorzugt von 0,5 bis 15,0 Gew.-%, besonderes bevorzugt von 1,0 bis 6,0 Gew.-% bezogen auf das Gesamtgewicht des Festkörpergehaltes des Verbundwerkstoffs, im Trägermaterial enthalten ist.

Es ist besonders bevorzugt, wenn die Längsausdehnung der organischen und/oder anorganischen Faser im Wesentlichen parallel zu den Teilchen des schichtartig aufgebauten, physikalisch wirkenden Treibmittels erfolgt. In diesem Fall unterstützen die organischen und/oder anorganischen Fasern im Brandfall den Effekt, dass die Expansion zielgerichtet in eine Raumrichtung erfolgt.

Da die im Brandfall gebildete Aschekruste unter Umständen zu instabil ist und daher abhängig von deren Dichte und Struktur etwa durch Luftströmungen verblasen werden kann, was sich negativ auf die abschottende Wirkung des Brandschutzelementes auswirkt, kann das Trägermaterial zusätzlich mindestens einen Aschekrustenstabilisator enthalten.

Ein *"Aschekrustenstabilisator"* ist eine sogenannte gerüstbildende Verbindung, die das Kohlenstoffgerüst (Aschekruste), das aus dem physikalisch wirkenden Treibmittel und dem Trägermaterial gebildet wird, stabilisiert. Die prinzipielle Wirkungsweise ist dabei die, dass die an sich sehr weichen entstehenden Kohlenstoffschichten durch anorganische Verbindungen mechanisch verfestigt werden. Die Zugabe eines solchen Aschekrustenstabilisators trägt zu einer wesentlichen Stabilisierung der Intumeszenzkruste im Brandfall bei, da diese Additive die mechanische Festigkeit der intumeszierenden Schicht erhöhen und/oder deren Abfallen verhindern, wodurch die isolierende Wirkung aufrechterhalten oder verstärkt wird.

Als Aschekrustenstabilisatoren bzw. Gerüstbildner kommen die üblicherweise in Brandschutzformulierungen verwendeten und dem Fachmann bekannten Verbindungen in Betracht, beispielsweise teilchenförmige Metalle, wie Aluminium, Magnesium, Eisen und Zink. Das teilchenförmige Metall kann in Form eines Pulvers, von Plättchen, Schuppen, Fasern, Fäden und/oder Whiskers vorliegen, wobei das teilchenförmige Metall in Form von Pulver, Plättchen oder Schuppen eine Teilchengröße von ≤50 µm, vorzugsweise von 0,5 bis 10 µm besitzt. Im Fall der Verwendung des teilchenförmigen Metalls in Form von Fasern, Fäden und/oder Whiskers ist eine Dicke von 0,5 bis 10 µm und eine Länge von 10 bis 50 µm bevorzugt. Als Aschekrustenstabilisator kann alternativ oder zusätzlich ein Oxid oder eine Verbindung eines Metalls aus der Aluminium, Magnesium, Eisen oder Zink umfassenden Gruppe eingesetzt werden, insbesondere Eisenoxid, vorzugsweise Eisentrioxid, Titandioxid, und/oder ein Borat, wie Zinkborat. Beispiele derartiger Additive finden sich auch in US 4 442 157 A, US 3 562 197 A, GB 755 551 A sowie EP 138 546 A1.

Bevorzugt ist der Aschekrustenstabilisator eine phosphorhaltige Verbindung, die unter Salzen und Derivaten der Oxosäuren des Phosphors ausgewählt ist. Die Oxosäuren des Phosphors werden eingesetzt, da deren Palette sehr groß ist.

Als Phosphorsäureverbindungen können beispielhaft erwähnt werden: Monoammoniumphosphat, Diammoniumphosphat, Ammoniumphosphat, Ammoniumpolyphosphat, Melaminphosphat, Melaminpolyphosphate, Melaminharzphosphate, Kaliumphosphat, Polyolphosphate wie etwa Pentaerythritphosphat, Glyzerinphosphat, Sorbitphosphat, Mannitphosphat, Dulcitphosphat, Neopentylglykolphosphat, Ethylenglykolphosphat, Dipentaerythritphosphat und dergleichen. Bevorzugt wird als Phosphorsäureverbindung ein Polyphosphat oder ein Ammoniumpolyphosphat eingesetzt. Unter Melaminharzphosphaten sind dabei Verbindungen wie Umsetzungsprodukte aus Lamelite C (Melamin-Formaldehyd-Harz) mit Phosphorsäure zu verstehen.

Der Aschekrustenstabilisator ist bevorzugt in einer Menge von etwa 5 bis 35 Gew.-%, bevorzugt 7 bis 30 Gew.-%, besonders bevorzugt 10 bis 28 Gew.-%, bezogen auf das Gesamtgewicht des Festkörpergehaltes des Verbundwerkstoffs, im Trägermaterial enthalten ist.

Darüber hinaus können weitere Brandschutzadditive, insbesondere solche, die eine chemische Intumeszenz bewirken, und solche, welche ablativ wirken, in der Zusammensetzung enthalten sein. Als *"chemische Intumeszenz"* wird die Bildung einer voluminösen, isolierenden Ascheschicht durch aufeinander abgestimmte Verbindungen, die bei Hitzeeinwirkung miteinander reagieren, bezeichnet. Diese sind im Allgemeinen ein Kohlenstofflieferant, ein Säurebildner und ein Gasbildner.

Als *"Kohlenstofflieferant"* wird eine organische Verbindung bezeichnet, die durch unvollständige Verbrennung ein Kohlenstoffgerüst hinterlässt und nicht vollständig zu Kohlendioxid und Wasser verbrennt (Carbonifizierung). Diese Verbindungen werden auch als *"Kohlenstoffgerüstbildner"* bezeichnet. Als *"Säurebildner"* wird eine Verbindung bezeichnet, die sich unter Hitzeeinwirkung, d.h. oberhalb etwa 150°C beispielsweise durch Zersetzung eine nicht flüchtige Säure bildet und dadurch als Katalysator für die Carbonifizierung wirkt. Zudem kann sie zur Erniedrigung der Viskosität der Schmelze des Trägermaterials beitragen. Hiermit gleichbedeutend wird der Begriff *"Dehydrierungskatalysator"* verwendet. Ein *"Gasbildner"* ist eine Verbindung, die sich bei erhöhter Temperatur unter Entwicklung inerter, d.h. nicht-brennbarer Gase zersetzt und das durch die Carbonifizierung gebildet Kohlenstoffgerüst und gegebenenfalls das erweichte Bindemittel zu einem Schaum aufbläht (Intumeszenz).

Gegebenenfalls kann das Trägermaterial weitere übliche Zusätze enthalten, wie Weichmacher, Füllstoffe, Pigmente, Additive zur Einstellung der rheologischen Eigenschaften, Verdickungsmittel, Dispergierhilfsmittel, Emulgatoren, Biozide, Fungizide, Konservierungs- und Alterungsschutzmittel, Frostschutzmittel, Netzmittel, Entschäumer und/oder Hautbildungsverzögerer. Diese weiteren Zusätze sind handelsübliche Produkte, die dem Fachmann bekannt sind.

Als Füllstoffe können die üblicherweise verwendeten und dem Fachmann bekannten Füllstoffe verwendet werden. Als Füllstoffe können beispielhaft erwähnt werden: Kreide, Bariumsulfat, Quarz, Talkum, Kaolin, Calciumsulfat und/oder Calciumsilikat. Der Füllstoff kann alleine oder als Gemisch von zwei oder mehreren verwendet werden.

Als Pigmente kann das Trägermaterial vorzugsweise Eisenoxid, Titandioxid, Zinksulfid, Zinkoxid und/oder organische oder anorganische Farbpigmente enthalten.

Als Additive zur Einstellung der rheologischen Eigenschaften kann das Trägermaterial beispielsweise hochdisperse Kieselsäure, Bentonite oder modifizierte Bentonite, Polyacrylate und/oder Cellulosederivate, wie Celluloseether, enthalten.

Die Additive können in einer Menge von etwa 0,25 bis 2,5 Gew.-%, bevorzugt 0,5 bis 1,7 Gew.-%, besonders bevorzugt 0,8 bis 1,6 Gew.-%, bezogen auf das Gesamtgewicht des Festkörpergehaltes des Verbundwerkstoffs, im Trägermaterial enthalten sein.

Schritt ii) zur Herstellung des erfindungsgemäßen Verbundwerkstoffes umfasst die Bereitstellung einer Vielzahl an Teilchen mindestens eines schichtartig aufgebauten, physikalisch wirkenden Treibmittels. Unter dem Begriff *"schichtartig aufgebaut"* wird im Sinne der vorliegenden Erfindung ein Material verstanden, welches strukturell anisotrop in Form von Schichten aufgebaut ist. Der schichtartige Aufbau kommt dadurch zustande, dass die Wechselwirkungen innerhalb einer Schicht wesentlich stärker ausgeprägt sind als zwischen den Schichten. Im Sinne der vorliegenden Erfindung bedeutet dies insbesondere, dass innerhalb der Schichten kovalente Bindungen vorliegen, wobei zwischen den Schichten nur schwache Wechselwirkung in Form elektrostatischer und/oder van-der-Waals-Kräfte wirken. Das schichtartig aufgebaute, physikalisch wirkende Treibmittel umfasst eine Vielzahl von Teilchen. Es ist erfindungswesentlich, dass durch das mechanische Formgebungsverfahren über den gesamten Verbundwerkstoff jeweils zueinander benachbarte Teilchen des schichtartig aufgebauten, physikalisch wirkenden Treibmittels im Wesentlichen parallel zueinander angeordnet werden.

Vorzugsweise liegt das schichtartig aufgebaute, physikalisch wirkende Treibmittel in Form von Plättchen vor, wobei die jeweils zueinander benachbarte Plättchen über den gesamten Verbundwerkstoff im Wesentlichen parallel zueinander angeordnet sind.

Die mittlere Teilchengröße des schichtartig aufgebauten, physikalisch wirkenden Treibmittels kann je nach Anwendungsfall in einem breiten Bereich liegen. Vorzugsweise hat das schichtartig aufgebaute, physikalisch wirkende Treibmittel eine mittlere Teilchengröße von 50 µm bis 4,0 mm, bevorzugt von 80 µm bis 3,5 mm und besonders bevorzugt von 100 µm bis 3,0 mm. Die mittlere Teilchengröße kann nach den dem Fachmann bekannten Methoden, wie beispielsweise mittels Siebanalyse nach DIN 66165 (2016), bestimmt werden.

Das schichtartig aufgebaute, physikalisch wirkende Treibmittel ist bevorzugt aus der Gruppe bestehend aus Graphit-Interkallationsverbindungen (auch bekannt als Blähgraphit), Schichtsilikat-Interkallationsverbindungen und Kombinationen davon ausgewählt, wobei Graphit-Interkallationsverbindungen oder blähfähiger Vermiculit bevorzugt sind.

Als Graphit-Interkallationsverbindungen kommen beispielsweise bekannte Einlagerungsverbindungen von SOₓ, NOₓ, Halogen, Essigsäure, Salpetersäure und/oder starken Säuren in Graphit in Frage. Diese werden auch als Graphitsalze bezeichnet. Bevorzugt sind Graphit-Interkallationsverbindungen, die bei Temperaturen (Aktivierungstemperaturen) von beispielsweise 120 bis 350°C unter Aufblähen SO₂, SO₃, NO und/oder NO₂ abgeben. Für die vorliegende Erfindung geeignete Blähgraphite sind im Handel erhältlich.

Vorzugsweise haben die Graphit-Interkallationsverbindungen eine mittlere Teilchengröße von 50 µm bis 1,0 mm, bevorzugt von 70 µm bis 0,7 mm und besonders bevorzugt von 90 µm bis 0,5 mm.

Als Schichtsilikat-Interkallationsverbindungen (expandierbare Schichtsilikate) kommen beispielsweise solche Verbindungen in Betracht, die durch Einlagerung von Interkallationsverbindungen in native, blähfähige Schichtsilikate, insbesondere nativen Vermiculit, erhältlich sind. Als Interkallationsverbindung sind Vertreter der Alkoholate von Lithium und Kalium und Salze von Lithium, Natrium und Kalium mit organischen Säuren und/oder wässrige Lösungen dieser bevorzugt, die durch Kationenaustausch in das native Schichtsilikat einlagert werden. In dieser Hinsicht wird Bezug genommen auf die DE 1029083 A1 sowie die darin genannte Literatur, z.B. EP 0 429 246 A1 deren Inhalte hiermit in diese Anmeldung aufgenommen werden.

Vorzugsweise haben die Schichtsilikat-Interkallationsverbindungen eine mittlere Teilchengröße von 100 µm bis 4,0 mm, bevorzugt von 120 µm bis 3,5 mm und besonders bevorzugt von 150 µm bis 3,0 mm.

Schritt iii) zur Herstellung des erfindungsgemäßen Verbundwerkstoffes umfasst das Vermischen des Trägermaterials und des schichtartig aufgebauten, physikalisch wirkenden Treibmittels zur Herstellung einer Vorstufe. Das Vermischen des Trägermaterials und des schichtartig aufgebauten, physikalisch wirkenden Treibmittels erfolgt vorzugsweise in einer Mehrkomponentenmischanlage. Es wird eine Vorstufe erhalten, in der das schichtartig aufgebaute, physikalisch wirkende Treibmittel homogen und isotrop innerhalb des Trägermaterial verteilt ist.

Das schichtartig aufgebaute, physikalisch wirkende Treibmittel kann je nach Anwendungsfall in einem sehr breiten gewichtsprozentualen Bereich in der Vorstufe und dementsprechend auch im Verbundwerkstoff vorhanden sein. Es ist jedoch bevorzugt, dass das schichtartig aufgebaute, physikalisch wirkende Treibmittel in einer Menge von 10 bis 90 Gew.-%, bevorzugt von 15 bis 70 Gew.-%, besonderes bevorzugt von 20 bis 55 Gew.-%, bezogen auf das Gesamtgewicht des Festkörpergehaltes des Verbundwerkstoffs, im Verbundwerkstoff enthalten ist.

Zur Herstellung des erfindungsgemäßen Verbundwerkstoffes ist es erfindungswesentlich, dass die Vorstufe während oder im Anschluss an Schritt iii) einem mechanischen Formgebungsverfahren unterzogen wird, in dem jeweils zueinander benachbarte Teilchen des schichtartig aufgebauten, physikalisch wirkenden Treibmittels über den gesamten Verbundwerkstoff im Wesentlichen parallel zueinander angeordnet werden.

Für die vorliegende Erfindung ist es erfindungswesentlich, dass über den gesamten Verbundwerkstoff jeweils zueinander benachbarte Teilchen des schichtartig aufgebauten, physikalisch wirkenden Treibmittels im Wesentlichen parallel zueinander angeordnet sind. Im Brandfall expandiert das schichtartig aufgebaute, physikalisch wirkende Treibmittel im Wesentlichen senkrecht zu den Schichten, aus denen es aufgebaut ist. Eine im Wesentlichen parallele Ausrichtung jeweils zueinander benachbarter Teilchen über den gesamten Verbundwerkstoff sorgt dafür, dass die Expansion im Wesentlichen in eine Raumrichtung erfolgt. Die im Wesentlichen parallele Ausrichtung der Teilchen ermöglicht somit eine räumliche Steuerung des Expansionsverhaltens im Brandfall. Beim Einsatz des erfindungsgemäßen Verbundwerkstoffs als oder in einem Brandschutzelement ist es somit möglich, die Expansion verstärkt in Richtung der zu verschleißenden Durchgangsöffnung zu lenken und somit ein seitliches Herausdrücken aus der Durchgangsöffnung zu verringern bzw. zu unterbinden. Das eingesetzte schichtartig aufgebaute, physikalisch wirkende Treibmittel steht zu einem großen Teil für den Verschluss der Durchgangsöffnung zur Verfügung, so dass die Verschlussfähigkeit insgesamt verbessert wird, womit eine deutliche Reduktion des Materialeinsatzes an schichtartig aufgebauten, physikalisch wirkenden Treibmittel einhergeht.

Der Begriff *"über den gesamten "Verbundwerkstoff"* im Sinne der vorliegenden Erfindung ist so zu verstehen, dass bei Betrachtung der Orientierung jeweils zueinander benachbarter Teilchen des schichtartig aufgebauten, physikalisch wirkenden Treibmittels eine Gesamtbetrachtung des Verbundwerkstoffes notwendig ist und die im Wesentlichen parallele Orientierung jeweils zueinander benachbarter Teilchen im Wesentlichen für das gesamte Volumen des Verbundwerkstoffes vorliegen muss, um zum erfindungswesentlichen Effekt zu führen. Eine lokale, zufällige parallele Anordnung jeweils zueinander benachbarter Teilchen in Teilen des Verbundwerkstoffes führt nicht zum erfindungswesentlichen Effekt einer im Sinne der Erfindung gerichteten Expansion. Aufgrund der Tatsache, dass die Betrachtung der Orientierung jedoch auf Ebene der einzelnen Teilchen und den dazu jeweils benachbarten Teilchen stattfindet, ist es nicht zwingend erforderlich, dass alle Teilchen des schichtartig aufgebauten, physikalisch wirkenden Treibmittels eine im Wesentlichen parallele Ausrichtung haben. Kommt es beispielsweise zu einer Krümmung des Verbundwerkstoffes bei der Anwendung sind die jeweils zueinander benachbarten Teilchen des schichtförmig aufgebauten, physikalisch wirkenden Treibmittels im Wesentlichen parallel angeordnet, wohingegen aufgrund der Krümmung des Verbundwerkstoffes nicht alle Teilchen im Wesentlichen parallel zueinander angeordnet sind.

Der Begriff *"im Wesentlichen parallel"* im Sinne der vorliegenden Erfindung ist so zu verstehen, dass die jeweils zueinander benachbarten Teilchen nicht den streng mathematischen Anforderungen von parallelen Ebenen genügen müssen, sondern auch eine leichte Verkippung der Ebenen erlaubt ist. Auch bei einer leichten Verkippung der Ebenen ist der oben beschriebene Effekt einer im Wesentlichen in eine Raumrichtung auftretenden Expansion weiterhin gewährleistet. Ferner umfasst der Begriff *"im Wesentlichen parallel"* im Sinne der vorliegenden Erfindung auch, dass ein geringer Anteil jeweils zueinander benachbarter Teilchen nicht parallel angeordnet sein muss, was beispielsweise produktionstechnisch bedingt sein kann. Erfindungsgemäß zeigen mindestens 75 %, bevorzugter mindestens 80 %, bevorzugter mindestens 85 %, bevorzugter mindestens 90 %, bevorzugter mindestens 95 % der zueinander benachbarten Teilchen des schichtartig aufgebauten, physikalisch wirkenden Treibmittels eine parallele Anordnung zueinander.

Die im Wesentlichen parallele Anordnung der jeweils zueinander benachbarten Teilchen des schichtartig aufgebauten, physikalisch wirkenden Treibmittels über den gesamten Verbundwerkstoff kann durch visuelle Inspektion eines Verbundwerkstoffes, gegebenenfalls mit Hilfe eines Mikroskops, durch einen Fachmann bestimmt werden.

Eine Quantifizierung einer eventuell vorhandenen Verkippung der Teilchen kann theoretisch dadurch beschrieben werden, dass ein Lot (90°) auf ein willkürlich gewähltes Teilchen des schichtartig aufgebauten, physikalisch wirkenden Treibmittels gefällt wird. Bei einer Verschiebung dieses Lots zu Teilchen, die diesem Teilchen benachbart sind, tritt vorzugsweise eine maximale Winkelabweichung zu 90° von 25°, bevorzugter von 15°, bevorzugter von 10°, bevorzugter von 5° und noch weiter bevorzugt von 2° auf.

Unter dem Ausdruck *"jeweils zueinander benachbarter Teilchen"* im Sinne der vorliegenden Erfindung sind solche Teilchen zu verstehen, die in allen drei Raumrichtungen in direkter Nachbarschaft zu einem bestimmten Teilchen liegen, d.h. die innerhalb einer ersten Sphäre um ein Teilchen angeordnet sind. Vorzugsweise sind unter dem Ausdruck *"jeweils zueinander benachbarter Teilchen"* nicht nur die direkt benachbarten Teilchen zu verstehen, sondern auch solche Teilchen, die wiederum den direkt benachbarten Teilchen eines Teilchens direkt benachbart sind, d.h. Teilchen, die über die erste Sphäre hinausgehen und innerhalb einer zweiten Sphäre um ein Teilchen angeordnet sind.

Bei der Herstellung des erfindungsgemäßen Verbundwerkstoffes werden durch das mechanische Formgebungsverfahren jeweils zueinander benachbarte Teilchen des schichtartig aufgebauten, physikalisch wirkenden Treibmittels über den gesamten Verbundwerkstoff im Wesentlichen parallel zueinander angeordnet. Daraus ergibt sich, dass im Verbundwerkstoff alle Teilchen des schichtartig aufgebauten, physikalisch wirkenden Treibmittels im Wesentlichen parallel zueinander angeordnet sein können. Dies stellt eine bevorzugte Ausführungsform der vorliegenden Erfindung da.

Eine im Wesentlichen parallele Ausrichtung aller Teilchen des schichtartig aufgebauten, physikalisch wirkenden Treibmittels ist jedoch nicht zwingend erforderlich, um den erfindungswesentlichen Effekt einer gezielten Expansion in im Wesentlichen eine Raumrichtung zu erzielen. Dies ist beispielsweise der Fall, wenn der Verbundwerkstoff in Form einer langen Bandage ausgestaltet ist, die beispielsweise um eine Leitungsdurchführung gewickelt wird, die durch eine Durchgangsöffnung hindurchführt. In diesem Fall sind die jeweils zueinander benachbarten Teilchen des schichtförmig aufgebauten, physikalisch wirkenden Treibmittels im Wesentlichen parallel angeordnet, wohingegen aufgrund der Wicklung und der damit einhergehenden Krümmung der Bandage nicht alle Teilchen im Wesentlichen parallel zueinander angeordnet sind. Sind die jeweils zueinander benachbarten Teilchen über den gesamten Verbundwerkstoff in diesem Fall in Längsrichtung der Bandage im Wesentlichen parallel zueinander angeordnet, findet die Expansion im Brandfall im Wesentlichen in Richtung des Zentrums der Durchgangsöffnung statt.

Vorzugsweise ist das mechanische Formgebungsverfahren ausgewählt aus der Gruppe bestehend aus Extrusion mit geformten Mundstücken in speziellen Geometrien, Spritzgießen, Rakeln, Kalandrieren, Pultrusion und Kombinationen davon. Verzugsweise ist das mechanische Formgebungsverfahren ausgewählt aus Extrusion mit geformten Mundstücken in speziellen Geometrien und/oder Kalandrieren.

Unter dem Begriff der *"Extrusion"* ist im Sinne der vorliegenden Erfindung das kontinuierliche Auspressen einer Masse unter Druck aus einer formgebenden Öffnung zu verstehen. Die formgebende Öffnung wird auch als Mundstück bezeichnet. Vorzugsweise wird die Extrusion mit einem Kolbenextruder oder einem Schneckenextruder durchgeführt. Die Verwendung von Mundstücken mit speziellen Geometrien, bei denen das Verhältnis von Höhe zu Länge möglichst klein ist, ermöglicht dabei die Ausrichtung der jeweils benachbarten Teilchen des schichtartig aufgebauten, physikalisch wirkenden Treibmittels über den gesamten Verbundwerkstoff. Vorteilhaft liegen die Maße des Mundstücks (Länge:Höhe) in einem Bereich von 310 mm:10 mm bis 7 mm:0,5 mm. Es ist weiterhin bevorzugt, dass die Maximalhöhe des Mundstücks ≤10mm, bevorzugter ≤ 5 mm, insbesondere ≤2 mm, bevorzugter ≤ 1,5 mm und insbesondere bevorzugt ≤ 1,0 mm ist.

Unter dem Begriff des *"Rakelns"* im Sinne der vorliegenden Erfindung ist ein Verfahren zu verstehen, in dem die Vorstufe mit einer Rakel auf eine Oberfläche aufgebracht wird.

Unter dem Begriff des *"Kalandrierens"* im Sinne der vorliegenden Erfindung ist ein Verfahren zu verstehen, bei dem ein Kalender umfassend ein oder mehrere Walzen verwendet wird. Die in Schritt iii) hergestellte Vorstufe, wird einmal oder mehrfach durch den Zwischenraum der Walze hindurchgeführt. Es ist dabei vorteilhaft, wenn dieser Schritt mehrfach, beispielsweise 4- oder 5-mal durchgeführt wird. Hierbei ist es weiterhin vorteilhaft, wenn der Abstand zwischen den Walzen mit jedem Schritt geringfügig verkleinert wird. Bevorzugt haben die Walzen einen Abstand von ≤ 10 mm, bevorzugter einem Abstand im Bereich von 0,5 mm bis 8 mm, bevorzugter von 1,0 mm bis 5,0 mm und besonders bevorzugt von 1,0 bis 3,0 mm.

Unter dem Begriff der *"Pultrusion"* im Sinne der vorliegenden Erfindung ist ein Verfahren zu verstehen, in welchem die Vorstufe auf ein Zugmaterial wie beispielsweise ein Glasfasergewebe aufgebracht wird und anschließend eine Zugkraft darauf einwirkt.

Unter dem Begriff des *"Spritzgießens"* im Sinne der vorliegenden Erfindung ist ein Verfahren zu verstehen, in dem die Vorstufe in einer Spritzguss-Maschine verflüssigt wird und unter Druck in eine Form eingespritzt wird.

Gemäß einer bevorzugten Ausführungsform liegt der erfindungsgemäße Verbundwerkstoff als formbare Masse oder als Formteil vor, insbesondere in Form von Streifen, Ringen oder Platten.

Vorzugsweise weist der Verbundwerkstoff eine maximale mittlere Schichtdicke von ≤ 10 mm, bevorzugter von ≤ 8 mm und besonders bevorzugt von ≤ 5 mm auf.

In einer bevorzugten Ausführungsform hat der Verbundwerkstoff eine mittlere Schichtdicke von 0,5 mm bis 4,6 mm.

### Kurzbeschreibung der Zeichnungen

Ausführungsformen werden anhand der beigefügten Zeichnungen näher erläutert.
- Figur 1: zeigt eine Querschnittsdarstellung einer Ausführungsform eines erfindungsgemäßen Verbundwerkstoffes;
- Figur 2: zeigt schematisch eine dreidimensionale Darstellung eines erfindungsgemäß bevorzugten Verbundwerkstoffes;
- Figur 3: zeigt eine Photographie eines aus dem Stand der Technik bekannten Brandschutzelement mit Blähgraphit eingebettet in ein polymeres Trägermaterial;
- Figur 4: zeigt eine Fotographie eines Versuchsaufbaus;
- Figur 5: zeigt die graphische Auswertung der Expansionsversuche eines erfindungsgemäßen Verbundwerkstoffes im Vergleich zu aus dem Stand der Technik bekannten Brandschutzelementen.

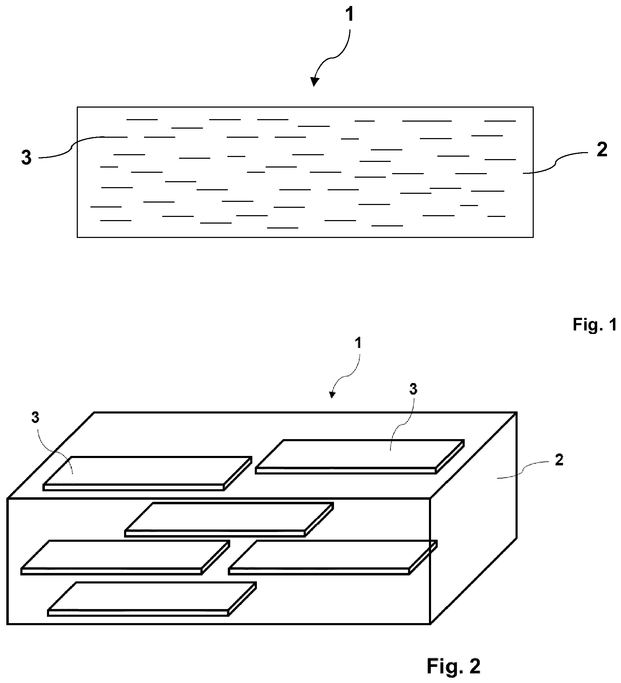

In Figur 1 ist eine Querschnittsdarstellung eines erfindungsgemäßen Verbundwerkstoffes (1) aufgezeigt. Der Verbundwerkstoff (1) umfasst ein Trägermaterial (2) und mindestens ein schichtartig aufgebautes, physikalisch wirkendes Treibmittel (3). Zueinander benachbarte Teilchen des schichtartig aufgebauten, physikalisch wirkenden Treibmittels (3) sind im Wesentlichen parallel zueinander angeordnet. Das schichtartig aufgebaute, physikalisch wirkende Treibmittel (3) ist innerhalb des Trägermaterials (2) eingebettet und ist im Wesentlichen gleichmäßig innerhalb des Trägermaterials (2) verteilt.

Figur 2 zeigt eine dreidimensionale Darstellung eines erfindungsgemäß bevorzugten Verbundwerkstoffes (1). Die Teilchen des schichtartig aufgebauten, physikalischen Treibmittels (3) sind in der Form flacher Quader dargestellt. Jeweils zueinander benachbarte Teilchen des schichtartig aufgebauten, physikalischen Treibmittels (3) sind über den gesamten Verbundwerkstoff (1) parallel zueinander angeordnet. Figur 2 zeigt eine bevorzugte Ausführungsform, bei der alle Teilchen des schichtartig aufgebauten, physikalischen Treibmittels (3) über den gesamten Verbundwerkstoff (1) parallel zueinander angeordnet sind.

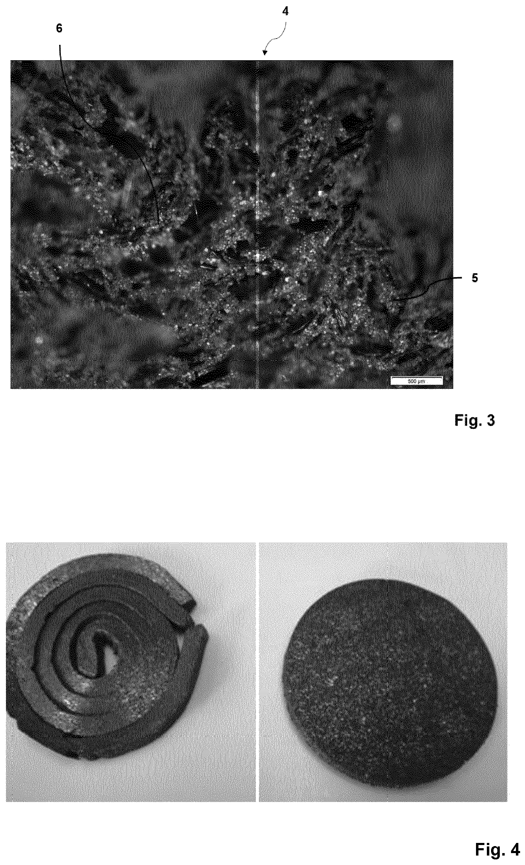

Figur 3 zeigt eine Photographie einer mikroskopischen Analyse (25-fache Vergrößerung) eines aus dem Stand der Technik bekannten Verbundwerkstoffes (4), welches als intumeszierendes Inlay in einer Brandschutzmanschette verwendet wird (Hilti, CP644 Brandschutzmanschette, Schichtdicke des Verbundwerkstoffes 4,5 mm). Das Inlay wurde mittels Extrusion mit einem Standardmundstück hergestellt und umfasst eine Vielzahl an Blähgraphitteilchen (6), welche in ein polymeres Trägermaterial (5) eingebettet sind. Die mikroskopische Analyse zeigt, dass die einzelnen Blähgraphitteilchen (6) entlang der Fertigungsrichtung ausgerichtet sind. Eine Betrachtung des gesamten Inlays zeigt eine isotrope und zufällige Ausrichtung der einzelnen Blähgraphitteilchen (6) entlang der Fertigungsebene, bei der an einzelnen lokalen Stellen zueinander benachbarte Blähgraphitteilchen parallel zueinander angeordnet sein können. Die Photographie zeigt, dass eine im Wesentlichen parallele Orientierung jeweils zueinander benachbarter Blähgraphitteilen (6) über das gesamte Inlay nicht gegeben ist.

Figur 4 zeigt eine Fotographie eines Versuchsaufbaus, mit dem die im Wesentlichen parallele Anordnung benachbarter Teilchen des schichtartig aufgebauten, physikalisch wirkenden Treibmittels nachgewiesen werden kann.

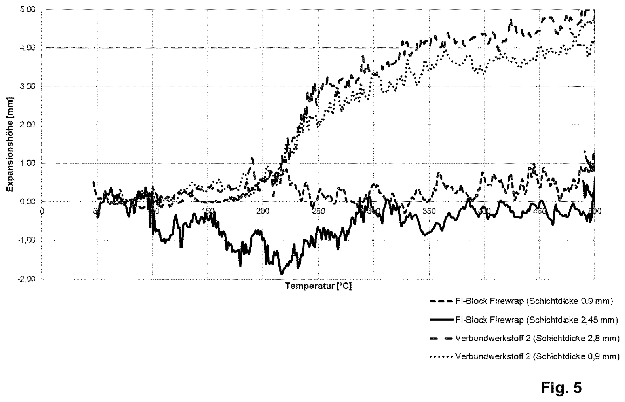

Figur 5 zeigt die graphische Auswertung der Expansionsversuche eines erfindungsgemäßen Verbundwerkstoffes im Vergleich zu aus dem Stand der Technik bekannten Brandschutzelementen.

Die Erfindung ist nicht auf die gezeigten Ausführungsformen beschränkt. Insbesondere können einzelne Merkmale einer Ausführungsform unabhängig von den anderen Merkmalen der entsprechenden Ausführungsform in einer weiteren erfindungsgemäßen Ausführungsform enthalten sein, d.h. die beschriebenen Merkmale sind beliebig miteinander kombinierbar.

Gemäß einem zweiten Aspekt der vorliegenden Erfindung ist ein Verfahren zur Herstellung des erfindungsgemäßen Verbundwerkstoffes vorgesehen umfassend die folgenden Schritte:
i) Bereitstellen eines Trägermaterials,
ii) Bereitstellen einer Vielzahl an Teilchen mindestens eines schichtartig aufgebauten, physikalisch wirkenden Treibmittels,
iii) Vermischen des Trägermaterials und des schichtartig aufgebauten, physikalisch wirkenden Treibmittels zur Herstellung einer Vorstufe,
dadurch gekennzeichnet, dass die Vorstufe während oder im Anschluss an Schritt iii) einem mechanischen Formgebungsverfahren unterzogen wird, in dem jeweils zueinander benachbarte Teilchen des schichtartig aufgebauten, physikalisch wirkenden Treibmittels über den gesamten Verbundwerkstoff im Wesentlich parallel zueinander angeordnet werden.

Die vorstehenden Ausführungen zur Herstellung des erfindungsgemäßen Verbundwerkstoffes gelten gleichermaßen für das erfindungsgemäße Verfahren.

Der erfindungsgemäße Verbundwerkstoff ist dazu geeignet als Brandschutzelement eingesetzt zu werden oder in ein Brandschutzelement integriert zu werden. Demnach ist gemäß einem dritten Aspekt der vorliegenden Erfindung ein Brandschutzelement vorgesehen, welches den erfindungsgemäßen Verbundwerkstoff umfasst.

Das erfindungsgemäße Brandschutzelement kann in allen Formen ausgestaltet sein, die geometrisch den Einsatz als Brandschutzelement ermöglichen. In einer bevorzugten Ausführungsform ist das Brandschutzelement streifenförmig ausgestaltet und liegt in Form einer Endlosbandage vor.

Das erfindungsgemäße Brandschutzelement kann ein oder mehrere erfindungsgemäße Verbundwerkstoffe umfassen. Umfasst das Brandschutzelement mehr als einen Verbundwerkstoff ist es vorteilhaft, dass bei einer Schichtung von zwei oder mehr Verbundwerkstoffen, eine Funktionsschicht zwischen den Verbundwerkstoffen angeordnet wird. Die Funktionsschicht erstreckt sich vorzugsweise kontinuierlich zwischen den zwei oder mehr Verbundwerkstoffen. Vorzugsweise umfasst die Funktionsschicht mindestens ein semi-rigides Material bzw. bevorzugt besteht die Funktionsschicht aus dem mindestens einem semi-rigiden Material besteht. Unter dem Ausdruck *"semi-rigides Material"* im Sinne der vorliegenden Erfindung ist ein Material zu verstehen, welches sowohl eine ausreichende mechanische Festigkeit aufweist, um den von dem Verbundwerkstoff ausgehenden Blähdruck aufnehmen zu können ohne zerstört zu werden, als auch eine ausreichende Flexibilität, so dass die Expansion des schichtartig aufgebauten, physikalisch wirkenden Treibmittels nicht behindert wird. Es hat sich als vorteilhaft erwiesen, dass das semi-rigide Material ausgewählt ist aus der Gruppe bestehend aus Streckmetall, Glasfaser, Aluminiumfolie und Kombinationen daraus.

Gegenstand der vorliegenden Erfindung ist ferner die Verwendung eines erfindungsgemäßen Verbundwerkstoffes als Brandschutzelement zur Abdichtung von Durchgangsöffnungen und/oder Fugen in Bauelementen.

Die Erfindung wird anhand der nachfolgenden Beispiele näher erläutert.

### AUSFÜHRUNGSBEISPIELE

Es wurde eine Formulierung mit der nachstehenden Tabelle 1 aufgeführten Bestandteilen hergestellt, in dem die angegebenen Bestandteile miteinander vermischt wurden. Die hergestellte Formulierung umfasst ein Trägermaterial sowie ein schichtartig aufgebautes, physikalisch wirkendes Treibmittel und diese dient als Ausgangsmaterial zur Herstellung eines erfindungsgemäßen Verbundwerkstoffs.

**Tabelle 1: Bestandteile Formulierung zur Herstellung eines erfindungsgemäßen Verbundwerkstoffs [Gew.-%]**

| | **1** |
|---|---|
| Wässrige Acrylat-Dispersion (65 % Acrylat und 35% Wasser) | 38,1 |
| Blähgraphit (Kaisersberg) | 26,5 |
| Glasfaser Kurzschnitt (Durchmesser ~10µm, Länge 6 mm) | 4,4 |
| Ammoniumpolyphosphat | 18,3 |
| Melaminpolyphosphat | 5,3 |
| Di-Pentaerythritol | 7,4 |

Zur Herstellung eines erfindungsgemäßen Verbundwerkstoffes wurde eine definierte Menge der obigen Formulierung auf eine PE-Folie mit einer glatten Oberfläche aufgebracht und anschließend das Ausgangsmaterial durch Umschlagen der PE-Folie beidseitig bedeckt. Das mit PE-Folie bedeckte Ausgangsmaterial (Schichtdicke 10 mm) wurde mit einem Kalander (Abstand der Walzen im Kalander zwischen 0,5 mm und 10,0 mm) bearbeitet. Der Abstand der Walzen des Kalanders wurde in Schritten von 1 mm verkleinert und die vorgenannten Schritte wiederholt bis die gewünschte Schichtdicke erreicht war. Zur Glättung der Oberfläche wurde der letzte Bearbeitungsschritt mit dem Kalander zweifach durchgeführt. Alternativ wurde dieser Schritt durch Ausüben von Druck durch eine Rolle durchgeführt. Die so hergestellten Verbundwerkstoffe zeigen eine im Wesentlichen parallele Ausrichtung des schichtartig aufgebauten, physikalisch wirkenden Treibmittels innerhalb des Trägermaterials, welches mittels visueller Inspektion unter einem Mikroskop festgestellt wurde.

Ferner wurde ein erfindungsgemäßer Verbundwerkstoff (Verbundwerkstoff 2) nach der obigen Beschreibung hergestellt, wobei als Formulierung die Rohmasse des Produkts CP 648-E der Firma Hilti verwendet wurde. Diese Formulierung umfasst ein Trägermaterial (wässrige Acrylat-Dispersion) sowie ein schichtartig aufgebautes, physikalisch wirkendes Treibmittel.

Zur Bestimmung der Expansionseigenschaften der hergestellten Verbundwerkstoffe wurde ein Gerät zur Funktionsersatzprüfung verwendet, mit der die Höhe der Expansion (Richtung der Expansion nach oben) ermittelt werden konnte. Zum Vergleich kann aus diesen Messungen der sogenannte Expansionsfaktor bestimmt werden, der den Quotient aus Expansionshöhe des Verbundwerkstoffes zum Gesamtgewicht des Verbundwerkstoffes darstellt. Das Messgerät zur Durchführung der Funktionsersatzprüfung bestand aus zwei horizontal angeordneten beheizbaren Platten. Die obere Platte wies ein konstantes Gewicht auf. Zu vermessende Verbundwerkstoffe (kreisförmig mit einem Durchmesser von 45 mm) wurden zwischen den beheizbaren Platten angeordnet und einem Temperaturprogramm ausgesetzt (Starttemperatur 50 °C, Heizrate 20 °C/min, Zwischentemperatur 100 °C (5 min), Heizrate 20 °C, Endtemperatur 500 °C (15 min Haltezeit). Die obere Platte war in der Lage Expansion in die Höhe aufzuzeichnen.

Um eine im Wesentlichen parallele Ausrichtung jeweils zueinander benachbarter Teilchen des schichtartig aufgebauten, physikalisch wirkenden Treibmittels über den gesamten Verbundwerkstoff aufzuzeigen, wurde der nachstehende Versuchsaufbau gewählt. Aus dem jeweiligen Verbundwerkstoff wurden 4,5 mm bzw. 5,00 mm dicke Streifen geschnitten und diese wurden wie in Figur 2 dargestellt aufgerollt. Ein Streifen wurde so aufgerollt (Beispiel 2), dass die Expansion in x-Richtung (=Höhe) stattfindet und ein Streifen wurde um 90 ° gedreht (Beispiel 1), so dass die Expansion in die Fläche stattfindet.
Beispiel 1: gerollte Probe um 90 °, Annahme: vorwiegend flächige Expansion;
Beispiel 2: gerollte Probe, Annahme: Expansion vorwiegend in die Höhe;
Beispiel 3: ausgestanzte Referenzprobe, 45 mm Durchmesser.

Neben der Expansionshöhe wurde die Gesamtfläche der expandierten Proben anhand von Fotographien mittels Software bestimmt.

**Tabelle 2: Expansionshöhen und Gesamtflächen der Verbundwerkstoffe 1 und 2, geringfügige Abweichungen vom theoretischen Expansionsverhalten sind auf die Probenpräparation zurückzuführen.**

| Verbundwerkstoff | | Masse [g] | Probendicke [mm] | Expansionshöhe [mm] | Gesamtfläche [cm²] |
|---|---|---|---|---|---|
| **1** | Bsp. 1 | 5,55 | 5,0 | 7,12 | 137 |
| | Bsp. 2 | 5,77 | 5,0 | 11,70 | 89 |
| | Bsp. 3 | 5,76 | 5,0 | 17,31 | 71 |
| **2** | Bsp. 1 | 9,40 | 4,5 | 7,88 | 186 |
| | Bsp. 2 | 9,44 | 4,5 | 14,93 | 120 |
| | Bsp. 3 | 9,30 | 4,5 | 15,71 | 126 |

Es zeigte sich, dass alle Proben gemäß Beispiel 1 nur eine geringe Expansionshöhe aufwiesen, dafür eine hohe Zunahme der Gesamtfläche zeigten. Die Proben der Verbundwerkstoffe 1 und 2 gemäß den Beispielen 2 und 3 sind im Vergleich wesentlich stärker in die Höhe expandiert, wohingegen die Gesamtfläche deutlich kleiner blieb.

Ferner wurde mit dem oben beschriebenen Gerät zur Funktionsersatzprüfung die Expansionseigenschaften des erfindungsgemäßen Verbundwerkstoffes 2 im Vergleich zu den Expansionseigenschaften des käuflich erhältlichen Produkts FI-Block - Firewrap (erhältlich in 2 Dicken: 0,9 mm und 2,45 mm) der Fa. Sekisui, Japan untersucht. Dieses Produkt basiert auf einem polymeren Trägermaterial, in welches Blähgraphit eingebettet ist. Zur Bestimmung der Expansionseigenschaften des kommerziell erhältlichen Produktes FI-Block Firewrap wurden kreisrunde Proben mit Gewicht von 1,60 g (Dicke 0,9 mm) und 6,33 g (Dicke 2,45 mm) ausgestanzt Diese Proben wurden in das Gerät zur Funktionsersatzprüfung gelegt, das Temperaturprogramm gestartet und die Expansion nach oben gemessen. Die Ergebnisse im Vergleich zu den Ergebnissen der Expansion des erfindungsgemäßen Verbundwerkstoffes sind in Figur 5 dargestellt. Es hat sich gezeigt, dass die nicht erfindungsgemäßen Proben eine wesentlich geringere Expansionshöhe zeigen als die erfindungsgemäßen Verbundwerkstoffe. Ferner lässt sich das Auftreten einer negativen Expansionshöhe bei den nicht erfindungsgemäßen Proben durch ein Aufschmelzen des polymeren Trägermaterials erklären, welches stattfindet bevor die Expansion des Blähgraphits stattfindet.

## Patentansprüche

1. Verbundwerkstoff hergestellt durch ein Verfahren umfassend die folgenden Schritte:
i) Bereitstellen eines Trägermaterials,
ii) Bereitstellen einer Vielzahl an Teilchen mindestens eines schichtartig aufgebauten, physikalisch wirkenden Treibmittels,
iii) Vermischen des Trägermaterials und des schichtartig aufgebauten, physikalisch wirkenden Treibmittels zur Herstellung einer Vorstufe,
wobei die Vorstufe während oder im Anschluss an Schritt iii) einem mechanischen Formgebungsverfahren unterzogen wird, in dem über den gesamten Verbundwerkstoff jeweils zueinander benachbarte Teilchen des schichtartig aufgebauten, physikalisch wirkenden Treibmittels im Wesentlichen parallel zueinander angeordnet werden, wobei unter einem physikalisch wirkenden Treibmittel ein Material oder eine Komponente zu verstehen ist, die in der Lage ist, beim Überschreiten einer bestimmten Temperatur, der sogenannten Aktivierungstemperatur, physikalische Intumeszenz zu zeigen, und wobei mindestens 75 % der jeweils zueinander benachbarten Teilchen des schichtartig aufgebauten, physikalisch wirkenden Treibmittels eine parallele Anordnung zueinander zeigen.

2. Verbundwerkstoff nach Anspruch 1, **dadurch gekennzeichnet, dass** das schichtartig aufgebaute, physikalisch wirkende Treibmittel aus der Gruppe bestehend aus Graphit-Interkallationsverbindungen, Schichtsilikat-Interkallationsverbindungen und Mischungen davon ausgewählt ist.

3. Verbundwerkstoff nach einem der vorhergehenden Ansprüche, **dadurch gekennzeichnet, dass** das mechanische Formgebungsverfahren ausgewählt ist aus der Gruppe bestehend aus Extrusion, Spritzgießen, Rakeln, Kalandrieren, Pultrusion und Kombinationen davon.

4. Verbundwerkstoff nach Anspruch 3, **dadurch gekennzeichnet, dass** das mechanische Formgebungsverfahren ausgewählt ist aus der Gruppe bestehend aus Extrusion und/oder Kalandrieren.

5. Verbundwerkstoff nach einem der vorhergehenden Ansprüche, **dadurch gekennzeichnet, dass** das Trägermaterial eine Polymerdispersion auf Wasser- oder Lösungsmittelbasis umfasst.

6. Verbundwerkstoff nach einem der vorhergehenden Ansprüche, **dadurch gekennzeichnet, dass** Trägermaterial mindestens eine organische und/oder anorganische Faser umfasst.

7. Verbundwerkstoff nach einem der vorhergehenden Ansprüche, **dadurch gekennzeichnet, dass** der Verbundwerkstoff eine maximale Schichtdicke von ≤ 10 mm aufweist.

8. Verbundwerkstoff nach einem der vorhergehenden Ansprüche, **dadurch gekennzeichnet, dass** das schichtartig aufgebaute, physikalisch wirkenden Treibmittel eine mittlere Teilchengröße von 50 µm bis 4 mm aufweist.

9. Verfahren zur Herstellung eines Verbundwerkstoffes nach Anspruch 1, umfassend die Schritte:
i) Bereitstellen eines Trägermaterials,
ii) Bereitstellen einer Vielzahl an Teilchen mindestens eines schichtartig aufgebauten, physikalisch wirkenden Treibmittels,
iii) Vermischen des Trägermaterials und des schichtartig aufgebauten, physikalisch wirkenden Treibmittels zur Herstellung einer Vorstufe,
**dadurch gekennzeichnet, dass** die Vorstufe während oder im Anschluss an Schritt iii) einem mechanischen Formgebungsverfahren unterzogen wird, in dem über den gesamten Verbundwerkstoff jeweils zueinander benachbarte Teilchen des schichtartig aufgebauten, physikalisch wirkenden Treibmittels im Wesentlichen parallel zueinander angeordnet werden.

10. Brandschutzelement umfassend mindestens einen Verbundwerkstoff nach einem der Ansprüche 1 bis 8 oder hergestellt nach dem Verfahren gemäß Anspruch 9.

11. Verwendung eines Verbundwerkstoffes nach einem der Ansprüche 1 bis 8 oder hergestellt nach dem Verfahren nach Anspruch 9 als Brandschutzelement zur Abdichtung von Durchgangsöffnungen und/oder Fugen in Bauelementen.

## Claims

1. Composite material produced by a method comprising the following steps:
i) providing a carrier material,
ii) providing a plurality of particles of at least one layered, physically acting blowing agent,
iii) mixing the carrier material and the layered, physically acting blowing agent in order to produce a precursor, wherein the precursor, during or after step iii), is subjected to a mechanical shaping method in which adjacent particles of the layered, physically acting blowing agent are arranged substantially in parallel with one another over the entire composite material, wherein a physically acting blowing agent is understood to be a material or a component which is capable of exhibiting physical intumescence when a certain temperature, the so-called activation temperature, is exceeded, and wherein at least 75% of the adjacent particles of the layered, physically acting blowing agent exhibit a parallel arrangement with respect to one another.

2. Composite material according to claim 1, **characterized in that** the layered, physically acting blowing agent is selected from the group consisting of graphite intercalation compounds, layered silicate intercalation compounds, and mixtures thereof.

3. Composite material according to either of the preceding claims, **characterized in that** the mechanical shaping method is selected from the group consisting of extrusion, injection molding, doctoring, calendering, pultrusion, and combinations thereof.

4. Composite material according to claim 3, **characterized in that** the mechanical shaping method is selected from the group consisting of extrusion and/or calendering.

5. Composite material according to any of the preceding claims, **characterized in that** the carrier material comprises a polymer dispersion based on water or solvent.

6. Composite material according to any of the preceding claims, **characterized in that** the carrier material comprises at least one organic and/or inorganic fiber.

7. Composite material according to any of the preceding claims, **characterized in that** the composite material has a maximum layer thickness of ≤ 10 mm.

8. Composite material according to any of the preceding claims, **characterized in that** the layered, physically acting blowing agent has an average particle size of 50 µm to 4 mm.

9. Method for producing a composite material according to claim 1, comprising the steps of:
i) providing a carrier material,
ii) providing a plurality of particles of at least one layered, physically acting blowing agent,
iii) mixing the carrier material and the layered, physically acting blowing agent in order to produce a precursor, **characterized in that** the precursor, during or after step iii), is subjected to a mechanical shaping method in which adjacent particles of the layered, physically acting blowing agent are arranged substantially in parallel with one another over the entire composite material.

10. Fire protection element comprising at least one composite material according to any of claims 1 to 8 or produced by the method according to claim 9.

11. Use of a composite material according to any of claims 1 to 8 or produced by the method according to claim 9 as a fire protection element for sealing passage openings and/or joints in components.

## Revendications

1. Matériau composite fabriqué par un procédé comprenant les étapes suivantes :
i) fourniture d'un matériau support,
ii) fourniture d'une pluralité de particules d'au moins un agent propulseur à action physique et à structure stratifiée,
iii) mélange du matériau support et de l'agent propulseur à action physique et à structure stratifiée pour la fabrication d'un précurseur, dans lequel le précurseur est soumis, pendant ou après l'étape iii), à un procédé de formage mécanique dans lequel des particules respectivement adjacentes les unes aux autres de l'agent propulseur à action physique et à structure stratifiée sont disposées sensiblement parallèlement les unes aux autres sur l'ensemble du matériau composite, dans lequel on entend par « agent propulseur à action physique » un matériau ou un composant qui est en mesure de présenter une intumescence physique lorsqu'une température déterminée, appelée température d'activation, est dépassée par le haut, et dans lequel au moins 75 % des particules respectivement adjacentes les unes aux autres de l'agent propulseur à action physique et à structure stratifiée présentent une disposition parallèle les unes par rapport aux autres.

2. Matériau composite selon la revendication 1, **caractérisé en ce que** l'agent propulseur à action physique et à structure stratifiée est choisi dans le groupe constitué de composés d'intercalation de graphite, composés d'intercalation de silicate stratifié, et leurs mélanges.

3. Matériau composite selon l'une des revendications précédentes, **caractérisé en ce que** le procédé de formage mécanique est choisi dans le groupe constitué d'extrusion, moulage par injection, raclage, calandrage, pultrusion et leurs combinaisons.

4. Matériau composite selon la revendication 3, **caractérisé en ce que** le procédé de formage mécanique est choisi dans le groupe constitué d'extrusion et/ou de calandrage.

5. Matériau composite selon l'une des revendications précédentes, **caractérisé en ce que** le matériau support comprend une dispersion de polymère à base d'eau ou de solvant.

6. Matériau composite selon l'une des revendications précédentes, **caractérisé en ce que** le matériau support comprend au moins une fibre organique et/ou inorganique.

7. Matériau composite selon l'une des revendications précédentes, **caractérisé en ce que** le matériau composite présente une épaisseur de couche maximale de ≤ 10 mm.

8. Matériau composite selon l'une des revendications précédentes, **caractérisé en ce que** l'agent propulseur à action physique et à structure stratifiée présente une taille moyenne de particules allant de 50 µm à 4 mm.

9. Procédé de fabrication d'un matériau composite selon la revendication 1, comprenant les étapes consistant à :
i) fournir un matériau support,
ii) fournir une pluralité de particules d'au moins un agent propulseur à action physique et à structure stratifiée,
iii) mélanger le matériau support et l'agent propulseur à action physique et à structure stratifiée pour la fabrication d'un précurseur, **caractérisé en ce que** le précurseur est soumis, pendant ou après l'étape iii), à un procédé de formage mécanique dans lequel des particules respectivement adjacentes les unes aux autres de l'agent propulseur à action physique et à structure stratifiée sont disposées sensiblement parallèlement les unes aux autres sur l'ensemble du matériau composite.

10. Élément de protection contre l'incendie comprenant au moins un matériau composite selon l'une des revendications 1 à 8 ou fabriqué conformément au procédé selon la revendication 9.

11. Utilisation d'un matériau composite selon l'une des revendications 1 à 8 ou fabriqué conformément au procédé selon la revendication 9 en tant qu'élément de protection contre l'incendie pour l'étanchéification d'ouvertures de passage et/ou de joints dans des éléments de construction.
